(19) **Europäisches Patentamt European Patent Office Office européen des brevets**

(11) **EP 2 027 163 B1**

(12) **EUROPEAN PATENT SPECIFICATION**

(45) Date of publication and mention
of the grant of the patent:
**21.07.2010 Bulletin 2010/29**

(51) Int Cl.:
*C08F 2/48* (2006.01)       *C08F 12/36* (2006.01)
*B01J 20/26* (2006.01)       *C08F 212/06* (2006.01)
*C08F 220/02* (2006.01)      *C08F 2/06* (2006.01)

(21) Application number: **07725927.3**

(22) Date of filing: **08.06.2007**

(86) International application number:
**PCT/EP2007/005096**

(87) International publication number:
**WO 2007/144118 (21.12.2007 Gazette 2007/51)**

(54) **A METHOD FOR PRODUCING CROSS-LINKED SPHERICAL PARTICLES**

VERFAHREN ZUR HERSTELLUNG VON VERNETZTEN SPHÄRISCHEN TEILCHEN

PROCÉDÉ DE FABRICATION DE POLYMÈRE COMPRENANT DES PARTICULES SPHÉRIQUES RETICULÉES

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **13.06.2006 US 804581 P**

(43) Date of publication of application:
**25.02.2009 Bulletin 2009/09**

(73) Proprietor: **Merck Patent GmbH**
**64293 Darmstadt (DE)**

(72) Inventors:
• **IRGUM, Knut**
**918 92 Bullmark (SE)**
• **LIME, Fredrik**
**907 33 Umea (SE)**

(56) References cited:
**WO-A-2004/002603     US-A- 5 599 889**

• SCHWEITZ L ET AL: "Molecularly imprinted microparticles for capillary electrochromatographic enantiomer separation of propranolol" ANALYST, vol. 125, October 2000 (2000-10), pages 1899-1901, XP002451910
• VIBERG P ET AL: "Nanoparticles as Pseudostationary Phase in Capillary Electrochromatography/ESI-MS" ANALYTICAL CHEMISTRY, vol. 74, no. 18, 2002, pages 4595-4601, XP002451911

• XIANYONG LU ET AL: "Preparation of Narrow or Monodisperse Polymer Microspheres with Cyano Group by Distillation-Precipitation Polymerization" POLYMER BULLETIN, SPRINGER-VERLAG, BE, vol. 56, no. 2-3, 1 February 2006 (2006-02-01), pages 171-178, XP019334814 ISSN: 1436-2449
• UNSAL E ET AL: "Monodisperse-porous particles with different polarities by ''modified seeded polymerization'' and their use as chromatographic packing in HPLC" REACTIVE & FUNCTIONAL POLYMERS, ELSEVIER SCIENCE PUBLISHERS BV, NL, vol. 61, no. 3, November 2004 (2004-11), pages 353-368, XP004612496 ISSN: 1381-5148
• LIME FREDRIK ET AL: "Monodisperse polymeric particles by photoinitiated precipitation polymerization" MACROMOLECULES; MACROMOLECULES MAR 20 2007, vol. 40, no. 6, 20 March 2007 (2007-03-20), pages 1962-1968, XP002451912
• VIBERG P ET AL: "Reversed Phase Continuous Full Filling CEC-ESI-MS" CHROMATOGRAPHIA ; AN INTERNATIONAL JOURNAL FOR RAPID COMMUNICATION IN CHROMATOGRAPHY, ELECTROPHORESIS AND ASSOCIATED TECHNIQUES, VIEWEG VERLAG, WI, vol. 65, no. 5-6, 16 January 2007 (2007-01-16), pages 291-297, XP019476723 ISSN: 1612-1112

**Description**

The invention provides a method for producing a material comprising cross-linked spherical particles, which method comprises photoinitiated precipitation polymerization of the cross-linking monomer divinylbenzene (DVB) in presence of an initiator and a solvent.

Technical background

Spherical polymer particles and especially monodisperse polymer particles are of great interest as packing material in liquid chromatography as well as for other applications based on microsphere technology. The particles can be classified as porous or non-porous depending on their inherent pore structure. Non-porous micron-sized particles, used for chromatography, are not restricted by slow diffusion in the stagnant mobile phase inside pores, and are well suited for chromatographic separation of both large and small molecules. The particles are either used underivatized or after introduction of functional groups on the surface (Lee et al., J. Chromatog. A, 1995, 704, 307-314; Zheng et al., Macromolecules 2002, 35, 6828-6834). Narrow disperse DVB and styrenic particles have been made by dispersion polymerization, often with poly (N-vinylpyrrolidinone) as steric stabilizer to produce micron-size particles in a single batch (Li et al., J. Polym.sci, Part A. Polym. Chem. 1993, 31, 2473 - 2479; Choi et al., Polym. Sci. Part A: Polym. Chem. 2002, 40, (23), 4368-4377; Kawaguchi et al., Adv. Polym. Sci. 2005, 175, 299 - 328). These polymerizations have been carried out in numerous solvents where methanol and ethanol have been most common (Lee et al., J. Chromatog. A, 1995, 704, 307-314; Kawaguchi et al., Adv. Polym. Sci. 2005, 175,299 - 328). Dispersion polymerization needs precise optimization to achieve narrow size distribution, especially when there is a high degree of crosslinking (Downey et al., Macromolecules 1999, 32, 2838-2844; Downey et al., Macromolecules 2001, 34, 4534-4541).

In 1993 Stöver's group polymerized spherical monodisperse DVB particles by precipitation polymerization in acetonitrile using thermal initiation (Li et al., J. Polym. Sci., Part A, Polym. Chem. 1993, 31, 3257-3263). The monomer and initiator are typically soluble in the solvent and form an initially homogenous mixture. During the polymerization, a milky suspension is formed due to precipitation of the polymer in the solvent. Due to the high amount of crosslinking, the particles become self-stabilized and this gives a rigid surface of the particles (Downey et al., Macromolecules 1999, 32, 2838-2844). The initiation process has been thermally induced at elevated temperatures (ca. 70°C), using gentle agitation by rotating or rocking the polymerization vessel (Li et al., J. Polym. Sci., Part A, Polym. Chem. 1993, 31, 3257-3263; Shim et al., J. Polym. Sci., Part A: Polym. Chem. 2004, 42, 835-845; Shim et al., Colloid Polym. Sci. 2004, 283, 41-48; Downey et al., Macromolecules 1999, 32, 2838-2844; Downey et al., Macromolecules 2001, 34, 4534-4541). Monomer loading in precipitation polymerization is generally low (typically 2-5%) compared with dispersion polymerization processes where a monomer concentration of up to 40% is used (Lee et al., J. Chromatog. A, 1995, 704, 307-314; Li et al., J. Polym. Sci., Part A, Polym. Chem. 1993, 31, 3257-3263; Paine et al., Macromolecules 1990, 23, (12), 3104-3109). Bai *et al.* (Bai et al., Macromolecules 2004, 37, 9746-9752) used what they called distillation precipitation polymerization and managed to get coagulum free microspheres of DVB-80 with a monomer loading of 7.5% (v/v). Precipitation polymerization has not only been applied for homopolymers with crosslinking ability (e.g., DVB) but also for copolymers. Styrene (Shim et al., J. Polym. Sci., Part A: Polym. Chem. 2004, 42, 835-845; Shim et al., Colloid Polym. Sci. 2004, 283, 41-48), maleic anhydride (Frank et al., J. Polymer Sci., Part A: Polym. Chem. 1998, 36, 2223-2227) and different methacrylates (Li et al., J. Polym. Sci., Part A: Polym. Chem. 1999, 37, 2899-2907; Yang et al., J. Polym. Sci., Part A: Polym. Chem. 2005, 43, 1309-1311) have been co-polymerized with DVB to form monodisperse microspheres. Copolymerizations with monomer concentrations of up to 15% by volume have been reported to result in microspheres, however, a subsequent increase in polydispersity is then reported (Shim et al., Colloid Polym. Sci. 2004, 283, 41-48; Yang et al., J. Polym. Sci., Part A: Polym. Chem. 2005, 43, 1309-1311). Preparation of microspheres by precipitation polymerization has almost invariably been by thermally induced free radical initiation. One exception is radiation-induced polymerization that produced polymeric particles in a single batch consisting of various monomers without the use of initiator. The monomer solution were mixed with organic solvent and irradiated with gamma-rays from a $^{60}$Co source (Yoshida et al., Radiat. Phys. Chem. 1987, Naka et al.,J. Polym. Sci., Part A: Polym. Chem. 1991, 29, 1197-1202).

Xianyong Lu et al., Polymer Bulletin, Springer Verlag, Vol 56, No. 2-3, pages 171-178, 1 February 2006, disclose the preparation of narrow or monodisperse polymere microspheres with Cyano Group by Distillation-Precipitation Polymerisation.

Monodisperse porous particles with different polarities made by "modified seeded polymerisation" and their use as chromatographic packing in HPLC are disclosed by Unsal E. et al. in Reactive & Functional Polymers, Elsevier Science Publishers BV, Vol. 61, No. 3, pages 353-368, November 2004.

US 5,599,889 discloses a method for producing monodisperse cross-linked polymer microspheres.

In general, thermally initiated free radical polymerization reactions are known to be fast and uncontrolled processes. There is a need for an improved route for preparation of particles in a more controlled manner that ensures that the final particle size and distribution can be finely tuned throughout the polymerization process.

Summary of the invention

The present invention provides a new method of producing cross-linked spherical particles by using photo-initiated precipitation polymerization. Surprisingly, this concept slows down the polymerization process and gives a controlled growth of the particles, which in turn gives particles with a more narrow size distribution, as well as a broad time frame for optimization of the particle properties.

Thus, the present invention provides a method for manufacturing a polymeric material comprising cross-linked spherical particles, that are obtained by photoinitiated precipitation polymerization of cross-linking monomer and optionally a further monomer in the presence of an initiator and a solvent.

The cross-linking monomer is divinylbenzene (DVB).

Preferably, the further monomer is selected from the group of styrene, methacrylic acid (MAA), glycidyl methacrylate (GMA), 2-hydroxyethyl methacrylate (HEMA), and vinyl benzyl chloride (VBC). Accordingly, the core of the particles comprises poly-DVB, MAA-copoly-DVB, GMA-copoly-DVB, HEMA-copoly-DVB or VBC-copoly-DVB.

Preferably, the final particles are mono-dispersed particles. Preferably the sizes of the final particles are within the size range of 0.5 $\mu$m - 12 $\mu$m, such as 1 $\mu$m - 4 $\mu$m, 1 $\mu$m -1.5 $\mu$m, 1.5 $\mu$m - 4 $\mu$m, and 4 $\mu$m - 10 $\mu$m.

The particles have optionally been grafted with a monomer or a mixture of monomers comprising an ion-exchanging, hydrophilic, polar, non-polar or hydrophobic group.

Optionally, residual vinylic groups have been used for derivatization of the particles via a chemical reaction. Furthermore, residual halide groups such as chlorine groups, hydroxy groups, carboxylic acid groups or epoxy groups could also be used for derivatization of the particles.

Preferably, the resulting derivatized particles comprise any of or a mixture of ion-exchange, hydrophilic, polar, non-polar or hydrophobic groups.

The present invention provides a method for producing a polymeric material comprising cross-linked spherical particles. The method involves polymerization of one or more monomers by photoinitiated precipitation polymerization in the presence of an initiator and a solvent.

The monomers are

a) a crosslinking monomer selected from the group of divinylbenzene; and optionally

b) a further monomer selected from the group of styrene, methacrylic acid (MAA), glycidyl methacrylate (GMA), 2-hydroxyethyl methacrylate (HEMA), and vinyl benzyl chloride (VBC).

Preferably, the photoinitiation is induced by irradiation of the polymerization medium by a light source, preferably a powerful light source. Said light source is preferably a xenon lamp, more preferably a 150 W xenon lamp.

The initiator is preferably chosen from the group of peroxides, 2,2-dimethoxy-2-phenylacetophenone, benzoin methyl ether and azo compounds such as 2,2'-azobisisobutyronitrile (AIBN). The initiator concentration used in the method is typically within the range of 1.5 - 4 % (w/w), preferably 2 - 4 % (w/w) and most preferably about 2 % (w/w).

Preferably the solvent is acetonitrile, optionally together with THF and/or toluene. In case THF is used as a co-solvent together with acetonitrile, THF may be included in an amount of 10 - 50 % (v/v), preferably 10 - 40 % (v/v), more preferably 10 - 30 % (v/v), most preferably 20 - 30 % (v/v).

Photoinitiation is used to avoid coagulum and to reach spherical particles with high monodispersity. Similarly, polymerization time is used to control the conversion and the final particle diameter. Moreover, monomer concentration is used to control the conversion and the final particle diameter.

Preferably, the initial monomer concentration is between 2-10% (v/v), preferably 2 - 8 % (v/v), more preferably 2 - 6 % (v/v) and most preferably 2 - 4 % (v/v). Alternatively, the initial monomer concentration is less than 2%. Alternatively, the initial monomer concentration is above 10%.

The polymeric material obtained according to the invention can be used for chromatographic separation.

It can be provided a separation column for chromatographic separation of different molecules present in a sample, said column comprising a hollow tube with two open ends, wherein that the column contains polymeric particles obtained according to the invention.

Detailed description of the invention

This invention provides a method to prepare highly monodisperse polymer particles that are suitable as column-packing material as well as for other microsphere applications. The polymer particles may be prepared by a novel photoinitiated precipitation polymerization process of divinyl benzene monomers, optionally together with a further monomer selected from the group of styrene, methacrylic acid (MAA), glycidyl methacrylate (GMA), 2-hydroxyethyl methacrylate (HEMA), and vinyl benzyl chloride (VBC), together with an initiator such as 2,2'-dimethoxy-2-phenyl acetophenone, benzoin methyl ether, or an azoinitiator e.g. 2,2'-azobisisobutyronitril (AIBN). A 150 W Xenon lamp is typically used to irradiate the sample solution and thereby start the polymerization process. Acetonitrile, optionally together with tetrahydrofuran or toluene, may be used as solvent as its properties as being a near-theta solvent for the monomer, diminish the need for steric stabilizers during the precipitation polymerization process. Other solvents with similar properties might also be used. The size of the particles ranges from 0,5 $\mu$m to 12 $\mu$m. Examples of particle size are from 1,5 $\mu$m to 5 $\mu$m, from 1 $\mu$m to 4 $\mu$m, from 1 $\mu$m to 1.5 $\mu$m; from 1.5 $\mu$m to 4 $\mu$m, from 4 $\mu$m to 10 $\mu$m. The particle size may be varied by changing the monomer concentration between 2 - 10% (v/v) and the time for polymerization. By using photoinitiation instead of thermal initiation it was possible to avoid coagulum and reach spherical particles with high monodispersity under high monomer loading. The very long irradiation time required (polymerization time) constitutes one main difference from earlier reported thermally initiated processes for precipitation polymerization.

The polymer material obtained according to the invention is preferable in the form of mono-dispersed beads. Particles consisting of cross-linked divinyl benzene as well as co-polymers such as styrene-co-divinyl benzene and vinylbenzyl chloride -co-divinyl benzene are extremely hydrophobic. Particles consisting of divinylbenzene co-polymerized with a monomer chosen from the group of methacrylic acid (MAA), glycidyl methacrylate (GMA), 2-hydroxyethyl methacrylate (HEMA) are less hydrophobic.

The beads can be grafted with a polymer or monomer comprising an ion-exchanging group and/or with hydrophilic or polar monomer or a non-polar monomer. They may also be derivatised with chemical groups via a chemical reaction. Examples of groups for derivatization are vinylic groups, ion-exchange groups, hydrophilic and/or hydrophobic groups, among all, halide groups such as chlorine groups, hydroxy groups, carboxylic acid groups or epoxy groups.

The term initiator relates to initiators used within the field of radical polymerization, such as an azoinitiator e.g. AIBN that is used in the present method. Additional azo compounds that can be used as initiators can be found in Stevens, Polymer Chenistry, an Introduction, 3rd edition; Oxford University Press, New York 1999, pp. 172. A photo-initiator such as 2,2'-dimethoxy-2-phenyl acetophenone, benzoin methyl ether, peroxides or other azo-initiators could also be chosen.

As disclosed herein, the term "hydrophilic" relates to chemical groups, polymers or monomers comprising hydroxyl groups, or other polar or charged groups.

The term "hydrophobic" relates to chemical groups, polymers or monomers which are not compatible with water i.e. they do not dissolve in, absorb, or mix easily with water.

The term "polar" relates to chemical groups, polymers or monomers which have a permanent dipole, or have molecules with permanent dipoles.

The term "number average diameter ($D_n$)" and the term "weight average diameter $D_w$" is calculated using the following equations:

$$D_n = \Sigma N_i D_i / \Sigma N_i \quad [1]$$

$$D_w = \Sigma N_i D_i^4 / \Sigma N_i D_i^3 \quad [2]$$

The term "$N_i$" is the number of particles measured and the term "$D_i$" is the diameter of the measured particle. T he polydispersity index U can be calculated by using $D_n$ and $D_w$.

$$U = D_w / D_n \quad [3]$$

A distribution of particles is considered "monodisperse" when the polydispersity (U) index is between 1.0 and 1.1.

As disclosed herein, the term "polymer comprising an ion-exchanging group" relates to polymers comprising a cation-exchanging, or an anion-exchanging group that is commonly used in ion exchange chromatography or a zwitterionic group that can be used in chromatography, where said polymers are prepared from corresponding monomers grafted to poly(S-co-DVB) or poly(DVB).

It can be provided a chromatographic column, preferably used for a liquid chromatography (LC) system, which contains the inventive column packing material.

For the first time, highly mono-disperse spherical particles suitable as column packing material have been prepared using a photoinitiated precipitation polymerization approach, producing poly(DVB) or poly(styrene-co-DVB) particles of controlled particle size, that contains unreacted (pendant) vinylic groups that can be used for grafting or chemical reaction on the particle surface.

Short description of tables and figures

The invention will now be described with reference to the enclosed figures and tables, in which:

Table 1 presents the particle size and yield resulting from increasing the initial monomer loading for both DVB and S-co-DVB particles;

Table 2 presents the effect on particle size and yields as the initiator concentration was increased from 2 to 4 wt%;

Table 3 shows the reproducibility in particle size, yield and monodispersity for fixed polymerization times (52 and 163 hours, respectively);

Table 4 presents the increase in the number average diameter for poly(DVB) particles when the monomer concentration or the polymerization time increases;

Table 5 discloses results of photo-initiated co-polymerization of DVB with different monomers;

Table 6 presents results of photo-initiated polymerization with different THF concentrations;

Table 7 shows results of photo-initiated polymerizations made with different co-solvents;

Table 8 presents batches packed into stainless steel columns at 60 MPa;

Table 9 shows retention factors for test compounds under HILIC conditions;

Figure 1 shows a schematic drawing of the photopolymerization set-up for the photinitiated precipitation polymerization process.

Figure 2 visualizes the SEM micrographs corresponding to the outcome of thermally initiated precipitation polymerization processes. The scale in the micrographs corresponds to 5 μm (top and middle micrographs) and 2 μm (bottom micrograph);

Figure 3 shows SEM micrographs of poly(DVB) particles prepared by photoinitiated precipitation polymerization with 2 wt% initiator (AIBN) at 88 or 112 hours polymerization time, or with 4 wt% initiator (AIBN) at 88 or 112 hours polymerization time. The scale in the micrographs corresponds to 2 μm;

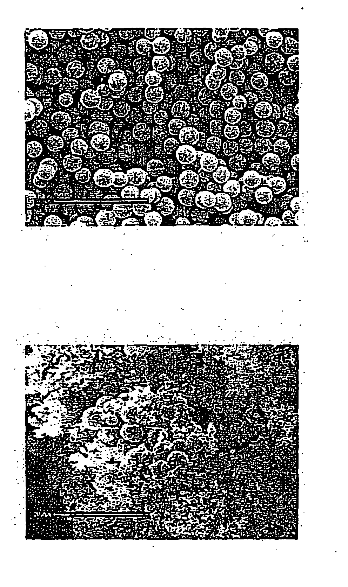

Figure 4 shows the SEM micrographs resulting from photoinitiated precipitation polymerization of poly(DVB) and poly(S-co-DVB), respectively, prepared using 10 % (v/v) monomer concentration in the polymerization mixture. The scale in the micrographs corresponds to 20 μm;

Figure 5 presents SEM micrographs ofpoly(DVB) particles after reduction of the polymerization time (i.e. irradiation time) to 24 hours. The scale in the micrograph corresponds to 2 μm;

Figure 6 shows the effect of polymerization time (88 hours, 112 hours and 163 hours, respectively) for poly(DVB) particles polymerized using 4 % (v/v) DVB monomer and 2 wt% initiator (AIBN). The scale in the micrograph corresponds to 5 μm;

Figure 7 discloses SEM micrographs of DVB co-polymerized with (A) MAA, (B) VBC. (C) GMA, and (D) HEMA under the conditions disclosed in Table 5. The monomer concentration was 4 vol-% except for DVB-co-VBC that had a concentration of 2 vol-%;

Figure 8 presents SEM micrographs from polymerizations with THF as a co-solvent where (A) is 10 % THF, (B) 20 % THF, (C) 30 % THF and (D) 40 % THF. Magnification of 5000;

Figure 9 provides SEM micrographs of DVB-co-GMA particles polymerized for 4 days (A) without and (B) with 10 % THF as co-solvent. Magnification of 5000;

Figure 10 shows SEM micrographs from a photopolymerization of DVB without the use of initiator. This batch (06-1-125) was polymerized for 4 days resulting in a particle diameter of 0.7 - 0.8 μm;

Figure 11 discloses a chromatogram showing a RPLC separation using a 2.1 mm i.d. X 50 column packed with DVB particles (batch 05-1-033). The compounds in eluting order are uracil, ethyl benzene and butyl benzene, all with a concentration of 5.0 ppm. The injection volume was 0.2 $\mu$L and the eluent consisted of acetonitrile:water 80:20 with a flow rate of 0.1 ml/min;

Figure 12 presents permeability for a 50 mm column packed with DVB particles having an average diameter of 1.52 $\mu$m;

Figure 13 shows a chromatogram of separation of four anions using carbonate eluent (3.9 mM $NaHCO_3$ and 3.1 mM $Na_2CO_3$). Sample concentration was 0.1 mM $CH_3COO^-$ and $Cl^-$ and 0.05 mM of $PO_4^{3-}$ and $SO_4^{2-}$. The eluting peaks are 1: $CH_3COO^-$, 2: $Cl^-$, 3: $PO_4^{3-}$, 4: $SO_4^{2-}$;

Figure 14 discloses a chromatogram using column 194BF3Q. Compounds in eluting order are $CH_3COO^-$, $Cl^-$, $PO_4^{3-}$, and $SO_4^{2-}$;

Figure 15 presents separation of five anions on column N3106A2 using carbonate eluent (3.9 mM $NaHCO_3$ and 3.1 mM $Na_2CO_3$) at a flow rate of 0.9 ml/min. The injection loop was 100 $\mu$l and the eluting order was F-, $CH_3COO^-$, $PO_4^{3-}$, $Cl^-$, $SO_4^{2-}$;

Figure 16 shows separation of five anions on column N1-106A using carbonate eluent (3.9 mM $NaHCO_3$ and 3.1 mM $Na_2CO_3$) at a flow rate of 0.7 ml/min. The injection loop was 100 $\mu$l and the eluting order was F, $CH_3COO^-$, $PO_4^{3-}$, $Cl^-$, $SO_4^{2-}$;

The expression "comprising" as used herein should be understood to include, but not be limited to, the stated items.

Experimental Section

The invention will now be described with reference to the enclosed examples. These examples are provided for illustration purposes only, and should not be interpreted as restricting the scope of the invention.

Example 1: Monodisperse particles consisting of DVB and styrene-copoly-DVB

Chemicals

Divinylbenzene (DVB-80; technical grade) consisting of 80% divinylbenzene isomers (Fluka, Buchs, Switzerland) and styrene (Acros Organics, Geel, Belgium) were freed of inhibitors by passing them through basic $Al_2O_3$ (Aldrich, Milwaukee, USA).
Initiator 2,2'-azobisisobutyronitril (AIBN) (Serva, Heidelberg, Germany) was used as received. Acetonitrile, analytical grade (Fischer Scientific, Loughborough, UK) was used as solvent and dried with 3 Å molecular sieves before use. Organic solvents such as acetone (Fischer Scientific, Loughborough, UK), ethanol (99.5%; Solveco Chemicals AD, Täby, Sweden), methanol and tetrahydrofuran (J.T. Baker, Deventer, Holland) were analytical grade and used without further purification.

Polymerization reaction

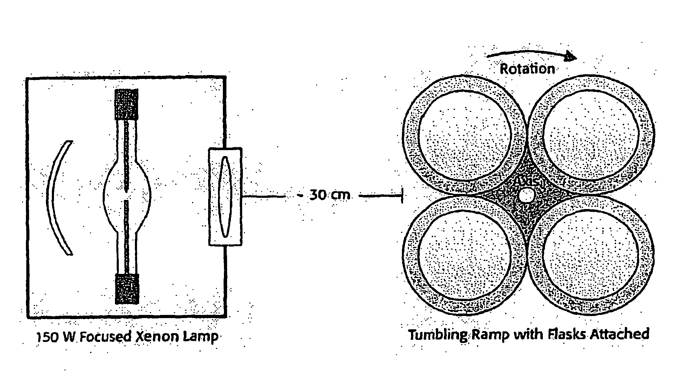

A typical polymerization reaction is carried out in 250 ml polypropylene (in some cases Teflon®PFA) flasks and the monomer content was varied between 2 to 10 % (v/v) with respect to the solvent (acetonitrile). The initiator, AIBN 2% (w/w) with respect to the monomer concentration, was added and the flasks were shaken until all initiator was dissolved. Before the polymerization was initiated the solution was degassed for at least 5 minutes by nitrogen to purge dissolved oxygen. The flasks were attached four at the time to a custom made tumbling rotation device, and tumbled around a centrum axis by means of a geared-down DC motor at speeds varying between 5-15 rpm. A 150 W xenon lamp with focusing optics was directed from the side towards the centre of the flask cluster at a distance of 30 cm. The lamp was only irradiating on one flask at the time but the rotation brought each flask into the intense light path every 4 to 12 seconds. In reality this means that the true radiation time was only about one fourth of the total time. For a schematic representation of the polymerization set-up, see Figure 1. The reaction time was varied from 24 hours to 163 hours and during operation the heat caused by the lamp increased the temperature in the reaction flasks from room temperature to about 31° C. For particles consisting of both styrene and DVB the percentage DVB was set to 50 mol-%. After polymerization the solvent and unreacted monomer was filtered off using 0.45 $\mu$m nylon membrane filters (Millipore, Bedford, MA). The particles were resuspended in acetone and placed on a shaker for 2 hours. This procedure was repeated with ethanol and the particles were finally washed three times with tetrahydrofuran and thereafter dried in a vacuum oven at 40° C for 24 hours. In some cases suction filtration with a G5 sintered glass filter was used for filtration instead of nylon membrane filters.

Characterization

The size and morphology of the particles were characterized by scanning electron microscopy (SEM) using a Cambridge 360ixp microscope run with a $LaB_6$ electron emitter (Leica Cambridge Ltd., Cambridge, UK). Micrographs were recorded in randomly selected particle populations and areas at different standardized magnifications and all specimens were prepared according to standardized methods. Samples were attached to sticky carbon tape mounted on alumina stubs (Agar Scientific Ltd., Stanstead, UK) and thereafter evaporation-coated with approximately 15 nm of carbon and gold in an Edwards E12 Vacuum Coating Unit (Edwards High Vacuum Ltd., Crawley, UK). From these SEM micrographs 100 particles were measured and their diameter used to calculate the number average diameter $D_n$ and the weight average diameter $D_w$ using equations 1-3 above (Bai et al., Polym. Int. 2005, 54,168-174; Liu et al., Langmuir 1997, 13, 4988-4994).

The particle distribution is considered to be monodisperse when the polydispersity index is between 1.0 and 1.1 (Liu et al., Langmuir 1997, 13, 4988-4994).

A Micrometrics (Norcross, GA) Tristar 3000, automated gas adsorption analyzer was used to measure the multipoint surface area and average pore width of the particles based on the Brunauer-Emmett-Teller equation (Brunauer, The Adsorption of Gases and Vapors. I. Physical Adsorption; Princeton University Press: Princeton 1945). The Tristar 3000 was also used to calculate the total pore volume of the particles by measuring nitrogen adsorption close to atmospheric pressure. Before analysis the particles were dried in a vacuum oven at 40°C overnight to remove adsorbed gases from the pores. Approximately 100 mg of particles were placed in a sample tube and dried again before analysis at 120°C for at least 3 hours under a continuous flow of nitrogen using a Micrometrics SmartPrep degassing unit.

Results and Discussion

In this work a polymerization system was developed for preparation of highly monodisperse and crosslinked micron-sized particles. The novel photoinitiated precipitation polymerization approach was found to give improved control over the particle size and coagulum compared to other procedures reported on in the literature. (Stöver et. al.)

Micron-sized particles are of great interest in different areas, such as for column-packing material in liquid chromatography.

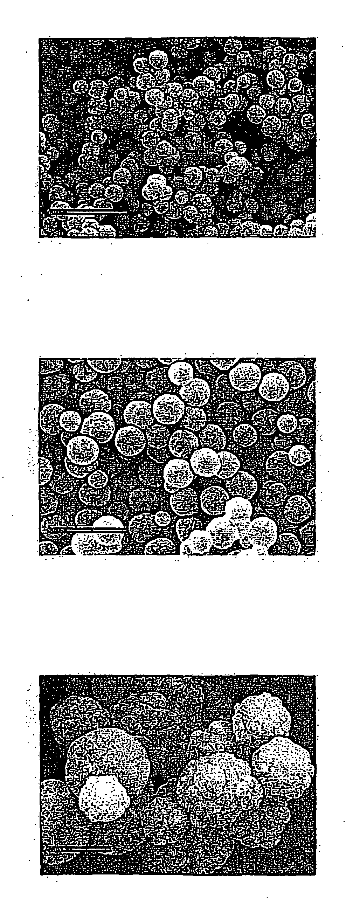

In initial experiments, thermal initiation was tested according to the procedures developed by Stöver et. Al (Li et al., J. Polym. Sci., Part A, Polym. Chem. 1993,31, 3257-3263). However, when the reaction flasks were submerged in a water bath at elevated temperature, the pressure created in the polypropylene flasks by release of nitrogen from the initiator coupled with the vapor pressure of acetonitrile caused the monomer mixture to leak out into the water bath. During the initial polymerizations we were also experiencing substantial amounts of coagulum and polydisperse particles (Figure 2).

The thermally initiated precipitation polymerization is highly sensitive to small changes in the setup, so photoinitiation by rotating the reaction vessels in air without heating was found to be a more robust procedure. Beside the reaction conditions there are many factors that influence the results of the final product such as monomer composition and concentration, initiator concentration, temperature, rotation speed, and time of polymerization.

Effect of Monomer and Initiator Concentrations

It has previously been reported that when the monomer loading is increased in thermally initiated precipitation polymerization, the particle diameter and yield also increases (Li et al., J. Polym. Sci., Part A, Polym. Chem. 1993, 31, 3257-3263; Shim et al., Colloid Polym. Sci. 2004, 283, 41-48; Bai et al., Macromolecules 2004, 37, 9746-9752; Yang et al., J. Polym. Sci., Part A: Polym. Chem. 2005, 43,1309-1311). Our results for photoinitiated polymerization are shown in Table 1 and correspond to previous published results when it comes to increase in size and yield. The highest monomer concentration used was 10% (v/v), still giving spherical monodisperse particles without any coagulum when DVB alone was used. For S-DVB mixture with concentration of 10% (v/v) particles were achieved but they were shaped like cauliflower and mixed with coagulum that resembles monolithic materials. When high monomer concentrations were used, starting at 6% (v/v) there was a tendency for the monomer to stick to the walls on the polypropylene flasks. This coating on the wall blocked the light and at the same time interfered with the tumbling giving somewhat larger size distribution.

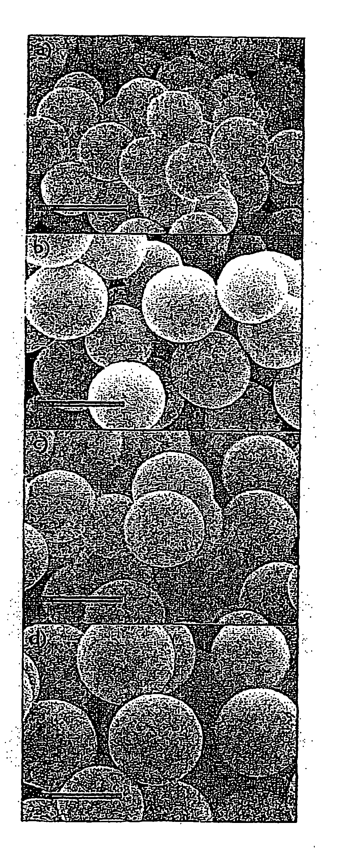

Experiments were also made where the initiator concentration was changed from 2 to 4% (w/w) resulting in increased particle diameter. The monomer concentrations in these polymerizations were set to 4% (v/v). The result from using twice the amount of initiator was the same as increasing the time of polymerization with 24 hours. The number average diameter was increased with 0.6 $\mu$m from 1.7 to 2.3 $\mu$m when the initiator concentration was increased from 2 to 4% (w/w) during 88 hours of polymerization. Roughly the same number average diameter was achieved when the initiator concentration was kept at 2% (w/w) but the polymerization time was increased by 24 hours to 112 hours which can be seen in Figure 3. In both cases the yield was about 19% and the result is summarized in Table 2. Since both the yield size of the particles are the same for the two experiments, 2% (w/w) initiator was considered to be sufficient and used for the rest of the experiments.

Particle formation in Photoinitiated Precipitation Polymerization

In general, we found that the particle formation is much slower when photoinitiation close to room temperature is used, compared to thermal initiation with the same initiator (AIBN). At higher temperature the solution turns milky white after approximately 1 hour while the photoinitiated systems reach this stage after several hours, depending on the monomer concentration used. For a thermally initiated precipitation polymerization, the conversion is initially very steep and whereafter it levels off (Downey et al., Macromolecules 1999, 32, 2838-2844). When using our photoinitiation approach, the conversion never reached the plateau within the timeframe of 163 hours polymerization time. Increasing the initiator concentration was found to speed up the polymerization, and increasing the monomer concentration was also found to give faster particle growth. The particle formation process is more rapid at higher concentrations, but the risk of coagulum of the particles increases. It seems like slower polymerization rate gives less gel type layer on the surface of the particles and less amount of oligomers in the solution that can be captured. Slower polymerization rate also prevents interactions with other particles to form coagulum in a cauliflower type like resin.

Thermal initiation has been reported to result in a coagulum at monomer concentration above 5% (v/v) (Li et al., J. Polym. Sci., Part A, Polym. Chem. 1993, 31, 3257-3263). With our photoinitiated precipitation polymerization approach, we achieved spherical coagulum free particles using 10% (v/v) monomer for the poly (DVB) particles. For poly(styrene-co-DVB) particle 8% (v/v) monomer (DVB:styrene 1:1) could be used and still generate spherical monodisperse beads.

The reproducibility of the described photoinitiated precipitation polymerization process was tested for poly(DVB) by rotating three flasks with a monomer loading of 3% (v/v). It can be concluded from Table 3 that the results were almost identical. Similar reproducibility studies were conducted for poly(styrene-co-DVB) polymerizations using monomer concentrations of 2 and 4% (v/v), respectively, with similar result (Table 3).

The effect of polymerization time

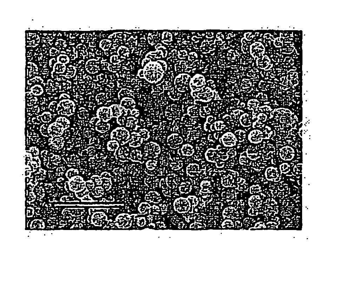

For thermally initiated polymerization the particles reaches a size of 2.5-3.0 $\mu$m during 24 hours of polymerization. In contrast, 24 hours of polymerization time for the photoinitiated precipitation process will result in particles in the nanometer range that suffers from a particle size distribution that are very polydisperse (Figure 5). This tendency is seen at all monomer concentrations tested.

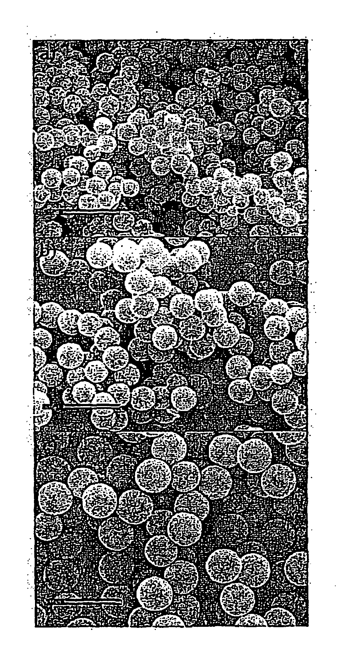

Increasing the polymerization time was found to yield increased particle growth and they become more uniformly distributed. It can be concluded from the micrographs in figure 6, that there is a considerable increase in particle size with polymerization time, when comparing particles polymerized at 88 hours, 112 hours and 163 hours, respectively.

As mentioned above, photoinitiation using the intensity from the Xenon lamp gives lower conversion rate than thermal initiation at elevated temperature using the same initiator (AIBN). For photoinitiated precipitation polymerization, it typically requires 48 hours to achieve monodisperse particles of varying size depending on monomer or initiator concentration. For photoinitiated precipitation polymerization, the yield is increasing with the polymerization time which changed from 3.4 % after 24 hours to 27.6 % after 163 hours (Table 4), independent of the monomer concentration used. In contrast, thermal initiation at 70°C using AIBN as initiator typically gives yields of ca 60% after 24 hours.

For particles polymerized for 163 hours with 4% (v/v) of DVB monomer resulted in an average particle diameter of about 3.0 $\mu$m (Table 4). For copolymer with monomer concentration of 4% (v/v) consisting of 50% crosslinker (DVB) the average particle diameter increased to 3.7 $\mu$m in the same amount of time (Table 3).

Surface area and morphology

The two different types of particles, poly(DVB) and poly(styrene-co-DVB) show differences with respect to their surface area and porosity. The poly(styrene-co-DVB) particles have a surface area of less than 5 $m^2$/g and generally decreases with increase in particle size. They have some pores present on the particle surface that are in the low mesoporous range, with an average pore diameter varying from 3.7 to 4.5 nm. The small pore volume of the particles as well as the adsorption isotherm indicates that the material behaves like a nonporous solid.

The poly(DVB) particles have a more complex pore structure. During the polymerization process, acetonitrile gets trapped inside the particles due to the rigid structure created by the heavy degree of crosslinking. This effect makes it difficult to reach equilibrium when measuring the surface area and pore size distribution of the material. However, after an extensive sample preparation involving high vacuum at elevated temperature for at least 24 hours it was possible to do a surface characterization. The adsorption isotherm for samples containing poly(DVB) particles shows a very steep rising in volume gas adsorbed and then it levels off to become almost horizontal. This indicates a microporous structure where the micropores are filled under relatively low pressure and after that no adsorption takes place. A microporous solid also gives a higher surface area and it decreases the longer the particles are allowed to grow. The poly(DVB) particles had a surface area ranging from 150 $m^2/g$ for particles with an average diameter of 1.5 $\mu m$ to roughly 45 $m^2/g$ for particles of 3.9 $\mu m$ (Table 4).

Example 2: Co-polymerization of divinyl benzene and various methacrylates by photo-initiated precipitation polymerization

Chemicals

Divinylbenzene (DVB-80) technical grade consisting of 80% divinylbenzene isomers, glycidyl methacrylate, 2-hydroxyethyl methacrylate, vinylbenzyl chloride (Fluka, Buchs, Switzerland) and methacrylic acid (Aldrich, Milwaukee, USA) was freed from of polymerization inhibitors by passing them through basic $Al_2O_3$ supplied by Aldrich. The initiator 2,2'-azobisisobutyronitril (AIBN) (Serva, Heidelberg, Germany) was re- crystallized from methanol before use while benzoin methyl ether (Fluka) and 2,2-dimethoxy-2-phenylacetophenone (Aldrich) were used as received. Acetonitrile, (Fisher Scientific, Loughborough, UK), tetrahydrofuran (J.T Baker, Deventer, Holland) and toluene (Merck, Darmstadt, Germany) all analytical grade, were used as solvents, were dried with 3 A molecular sieves before use. 2-methoxyethanol (Riedel-de Haën, Seelze, Germany), and 2-propanol (Fisher Scientific) were co-solvents and used as received. Organic solvents used in the synthesis steps such as acetone (VWR International, Leuven, Belgium), ethanol (99.5 % Solveco Chemicals AB, Täby, Sweden), methanol (J.T Baker, Deventer, Holland) were analytical grade and used without further purification. Amines used for the functionalization reactions were diethanolamine (Aldrich), diethylamine and diethylenetriamine (both from Fluka) and methyl iodide (Fluka). Solvents for chromatography (acetonitrile and methanol) were of ultra gradient HPLC grade and HPLC grade, respectively. The water used for eluent preparation was of Milli-Q quality >15 M$\Omega$/cm (Millipore, Bedford, MA).

Copolymerization

The polymerizations were carried out in 250 ml polypropylene flasks with a monomer concentration ranging between 2 to 4 vol % with respect to the total amount of solvent. The amount of crosslinking monomer (DVB) used in the experiments was calculated from the moles of co-monomer. AIBN (2 wt % with respect to the monomer concentration) was added and the flasks were shaken until all initiator was dissolved. Before the polymerization was initiated, the solution was degassed for 10 minutes by nitrogen to remove dissolved oxygen. The flasks were attached to a rotor, four at the time, and tumbled along their long axes at 15 rpm. A 150 W xenon lamp was focused on one of the flasks and the reaction time was set to 95 hours. After polymerization, the solvent and unreacted monomer were filtered off and washed with acetone using 0.45 $\mu m$ nylon membrane filters. The particles were dried in a vacuum oven at room temperature for 24 hours.

Functionalization of GMA-copoly-DVB particles

The functionalization by attaching amines to the epoxy groups on the surface, where made in two steps: 1) a ring opening epoxy reaction followed by 2) conversion from tertiary to quaternary amine. In the first step, 0.5 g of DVB-co-GMA copolymer particle was weighted into a round bottom flask which contained a magnetic bar. The particles were suspended in 15 ml of methanol and heated in an oil bath at 60 °C. When the mixture was homogeneous, 0.44 ml of diethanolamine was added slowly to the solution. When diethylamine was used, the added amount was 0.3 ml and for diethylenetriamine 0.5 ml. The solutions were stirred for 24 hours and the finished products were filtered, rinsed with methanol and acetone, and finally dried in vacuum oven at 30 °C. For the second step 0.4 g of dried particles containing tertiary amines were weighted into a round bottom flask with a magnetic stir bar followed by addition of 15 ml of acetone. The solution was left to suspend properly before adding 0.25 to 0.75 ml of methyl iodide drop wise into the solution. Reaction time for the second step was 24 to 30 hours at the temperature of 30 °C. The final products were filtered, rinsed with acetone and dried in a vacuum oven at 30 °C for 24 hours.

Characterization

The size and morphology of the particles were characterized by scanning electron microscopy (SEM) using a Cambridge 360ixp microscope run with a LaB$_6$ electron emittor (Leica Cambridge Ltd, Cambridge, UK). Micrographs were recorded in randomly selected areas at different standardized magnifications and all specimens were prepared according to standardized methods. Samples were attached to sticky carbon tape mounted on alumina stubs (Agar Scientific Ltd, Stanstead, UK) and thereafter evaporation-coated with approximately 15 nm of carbon and gold in an Edwards E12 Vacuum Coating Unit (Edwards High Vacuum Ltd, Crawley, UK).

A Tristar nitrogen adsorption desorption system (Micrometrics Instrument Co., Norcross, GA) was used to measure the surface area of the particles based on the Brunauer-Emmett-Teller equation. The particles were dried in vacuum oven at 40°C overnight to remove adsorbed gases form the pores. Approximately 100 mg of particles was placed in a sample tube and dried again before analysis at 120°C overnight while purged with nitrogen gas.

Pressure stability test for DVB particles

To test the pressure stability of the particles they were suspended in acetone and slurry-packed into 2.1 mm i.d. 50 mm in length stainless steel columns with an air driven fluid packing pump using methanol as solvent. The pressure for the packing pump was slowly raised to 60 MPa and then kept constant for 1 hour. The pressure was then slowly decreased to 10 MPa for an additional 30 minutes. Afterwards the columns were connected to a Bischoff model 2250 HPLC pump (Bischoff, Leonberg, Germany) to measure the pressure drop over the packed bed and specific permeability according to Darcy's law. Darcy's law is

$$u = \frac{\Delta P \cdot K_0 \cdot d_p^2}{\eta \cdot L}$$

where $u$ is the fluid velocity, $\Delta P$ the columns pressure drop, $K_0$ the specific permeability, $d_p$ the average size of the particles, $\eta$ the viscosity of the eluent and $L$ the length of the column. The system was run isocratic with an eluent consisting of methanol/water, 80/20 while the backpressure was recorded. After use the columns were unpacked and the particles dried in vacuum oven before scanned with SEM to see if they had been damaged.

Results and Discussion

Co-polymerizations

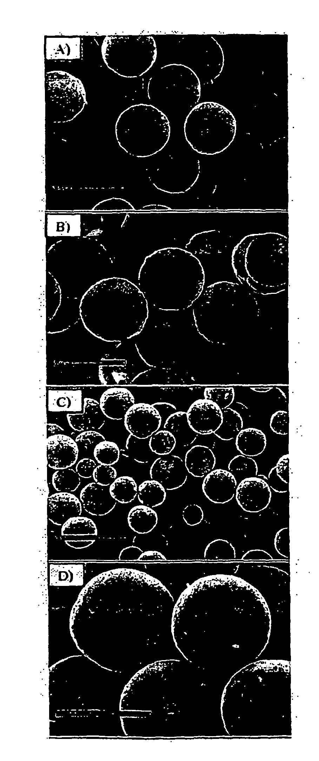

The result from the new co-polymerizations differs to some extent from the experimental results obtained for the styrene-co-DVB particles. It is proved to be possible to achieve monodispersity for co-polymers containing MAA and DVB. When GMA or HEMA were co-polymerized with DVB, particles were formed, but initial attempts have shown the particles to be somewhat inhomogeneous in size (polydisperse). What appear to be consistent in all co-polymerizations tested, is that the particles grow much faster than when DVB is polymerized alone. This unexpected effect, also became visible for the styrene-co-DVB particles in Example 1. A list of co-polymerizations is shown in Table 5 and corresponding SEM micrographs are seen in Figure 7. When VBC was used as the co-monomer it was not possible to get a smooth particle surface even with a low monomer concentration. SEM micrographs reveal a tendency of many small particles that stick together, which has also been seen for polymerizations carried out using too high monomer concentrations.

Co-solvent

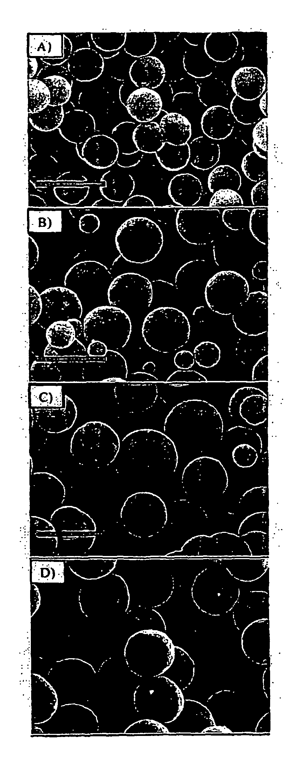

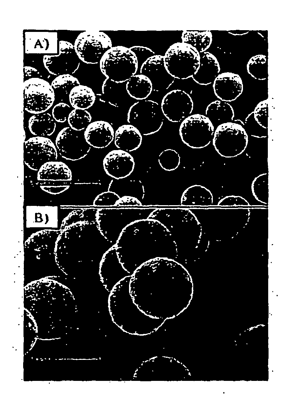

For some polymerizations a co-solvent (THF or toluene) was mixed with acetonitrile. For samples polymerized in acetonitrile mixed with THF the surface area decreased but the particles are still considered being microporous. Polymerization reactions were carried out in acetonitrile containing 10, 20, 30, 40 and 50 % (v/v) THF resulting in a faster growing rate with increasing THF concentration up to 40 % (v/v). When acetonitrile containing 50 % (v/v) THF was used a nanolatex had been formed. The monodispersity was generally seen to decrease with increasing amount of THF and for polymers prepared in acetonitrile containing 20 and 30 % (v/v) THF, a lot of small particle sizes can be seen (Table 6, Figure 8). THF was also tested as a co-solvent in the amount of 10 % (v/v) in a co-polymerization of DVB and GMA. The results show that these DVB-co-GMA particles are less polydisperse and have particle diameters in the region of double the size of particles prepared without THF as co-solvent (see Figure 9). Accordingly, using THF as a co-solvent may increase growth rate of the particles but it may also reduce monodispersity.

Three other solvents (2-methoxyethanol, 2-propanol and toluene) were also used in combination with acetonitrile to investigate their influence on the final particle shape and surface properties. These results are summarized in Table 7. These experiments indicate that THF is the preferred co-solvent in photoinitiated precipitation polymerization.

Example 3: Effect of initiators.

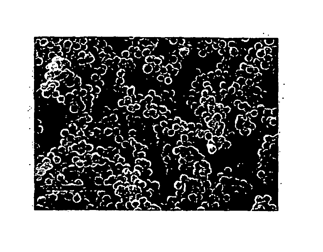

Polymer particles were prepared where DVB was photopolymerized using other initiators than AIBN. The experiments were carried out using a similar experimental set-up, using 2 wt % initiator with respect to the monomer concentration. The resulting particles appear to be monodisperse. (SEM micrograph not available). Beside using benzoin methyl ether and 2,2-dimethoxy-2-phenylacetophenone, initiators of similar type as well as other azo initiators can be expected to give comparable results. Since the intensity from the xenon arc lamp is high it was even possible to achieve narrow or monodisperse particles of DVB without the use of an initiator in the polymerization mixture (Figure 10). The yield however was only 4% after 4 days of polymerization and the particle diameter was roughly 0.8 $\mu$m. Apart from the initiator the polymerization procedure was the same.

Example 4: Chromatographic evaluation.

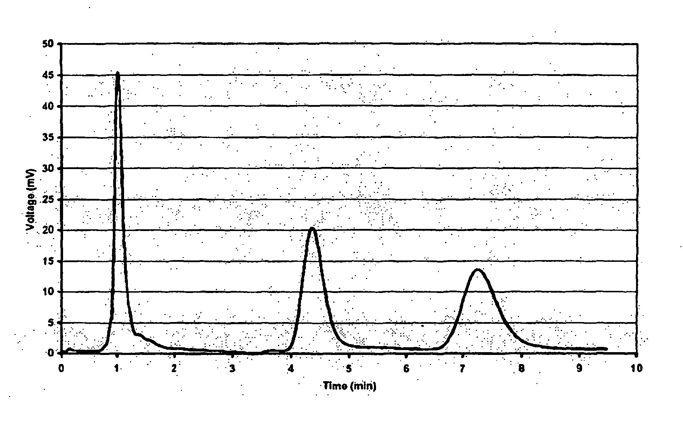

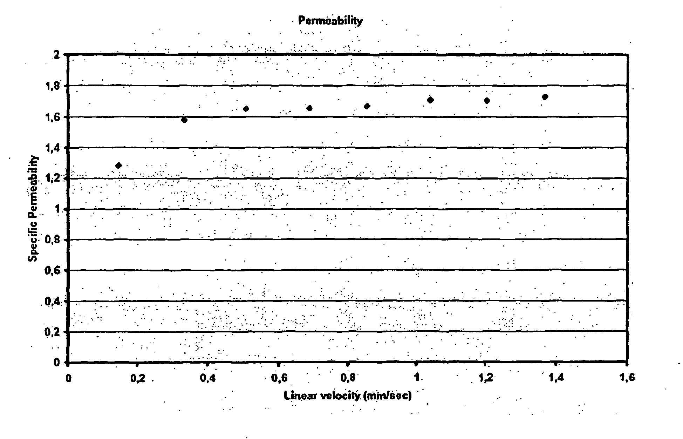

DVB particles from 5 different synthesis batches were packed into 2.1 mm i.d. 50 mm stainless steel columns at 60 MPa (Table 8). Separation of ethyl benzene and butyl benzene were made in reversed phase chromatographic mode, under isocratic conditions using an eluent containing acetonitrile and water, 80:20 (one example is shown in Figure 11). The permeability of the packed columns were measured with a methanol:water eluent, 80:20, since eluent viscosity data were available for such a system (Carr et al., Ind. Eng. Chem. 1951, 43, 692-696). At low flow rate the specific permeability drops slightly due to the pump not being able to run properly at low flow rates (Figure 12).

Example 5: Anionic chromatography.

Anionic chromatography setup

The anion exchange columns were evaluated using a LKB 2150 analytical HPLC pump (LKB, Bromma, Sweden) connected to a TOA ICA 5220 conductometric detector (TOA electronics Ltd., Tokyo, Japan). To suppress the background conductivity, an anion membrane suppressor (SAMS) (SeQuant AB, Umeå. Sweden) together with continuous anion regeneration system (CARS) (SeQuant AB, Umeå, Sweden) were used. Both carbonate and hydroxide eluent were used when small inorganic anions were separated in anion-exchange chromatographic mode.

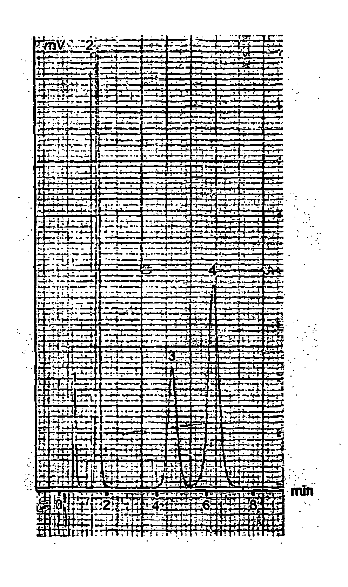

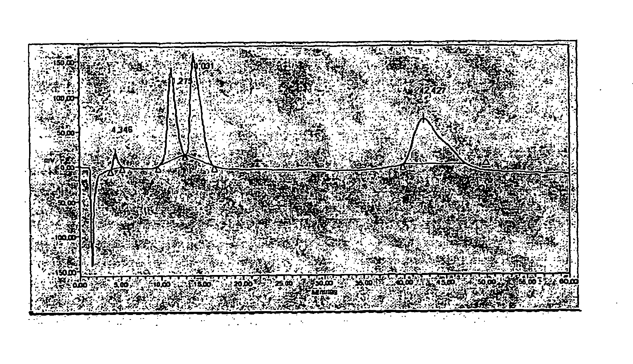

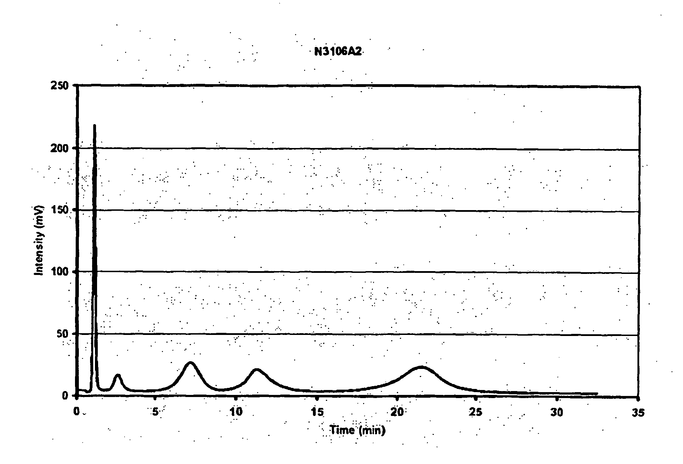

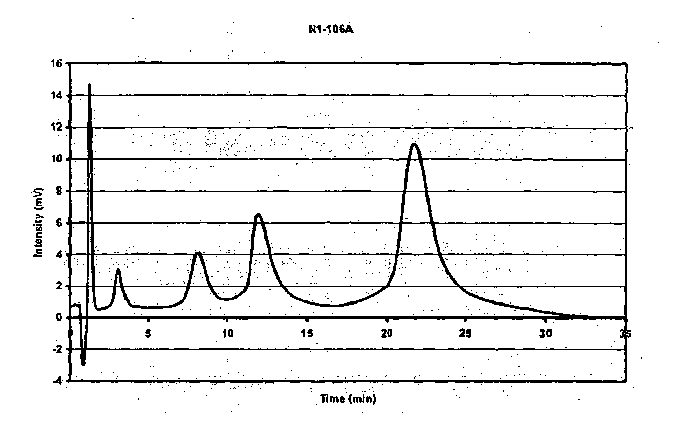

Anion chromatographic separation of anions was carried out using two different functionalization strategies of the DVB-co-GMA particles. Figure 13 shows a chromatogram from diethanolamine functionalized particles (C8F1Q) and Figure 14 provides a chromatogram obtained by using particles functionalized with diethylenetriamine (194BF3Q). The chromatograms presented in Figure 15 and 16 are obtained using columns containing particles functionalized with diethylamine. The particles used for anionic chromatography evaluations were slurry packed in 2.1 mm i.d. 50 mm PEEK columns

Example 6: HILIC experiments

In hydrophilic interaction chromatography (HILIC), polar or hydrophilic compounds will generally have higher retention than unpolar or hydrophobic compounds, using a relatively hydrophilic stationary phase and an eluent containing high concentration of acetonitrile. A series of analytes were injected on a column containing GMA-DVB particles functionalized with the diethylamine route previously described in the experimental section, in order to investigate if these particles were sufficiently hydrophilic to be used in HILIC mode chromatography.
An eluent containing 80% acetonitrile and 20% ammonium acetate buffer (pH 6.8, 5 mM total concentration) was employed and UV-detection was carried out at 254 nm.

The retention is tabulated as the retention factor k', which is calculated as:

$$k' = (t_r - t_0)/t_0$$

where $t_r$ is the retention time of the analyte and $t_0$ is the retention time of a unretained compound which correspond to the column void volume. The obtained results are shown in Table 9.

Toluene is typically seen to have high retention in reversed-phase chromatography (RPLC). In HILIC, however, toluene is typically eluting close to the column void volume.
These experiments show that a HILIC mechanism is controlling the retention rather than a RPLC mechanism since the more unpolar compounds are eluting close to the column void volume, while more hydrophilic analytes experience a longer retention on the column.

Tables

Table 1

| Increase in particle size and yields with increasing monomer loading for both poly(DVB) and poly(styrene-co-DVB) particles. | | | | | | | |
|---|---|---|---|---|---|---|---|
| Sample Id | DVB vol % | S-DVB vol% | AIBN wt% | P.Time h | $D_n$ $\mu$m | U | Yield (%) |
| 05-1-045 | 6 | | 2 | 163 | 3.914 | 1.002 | 27.6 |
| 05-1-046 | 4 | | 2 | 163 | 3.066 | 1.005 | 26.0 |
| 05-2-043 | | 4 | 2 | 163 | 3.739 | 1.017 | 23.1 |
| 05-2-044 | | 2 | 2 | 163 | 2.698 | 1.015 | 17.2 |

Table 2

| The effect on particle size and yield when the initiator concentration was increased from 2 to 4 wt%. | | | | | | | |
|---|---|---|---|---|---|---|---|
| Sample Id | DVB vol % | AIBN wt% | P.Time h | $D_n$ $\mu$m | U | Surface Area $m^2$/g | Yield (%) |
| 05-1-035 | 4 | 2 | 88 | 1.72 | 1.014 | 108.90 | 15.5 |
| 05-1-036 | 4 | 2 | 112 | 2.31 | 1.008 | 77.84 | 18.9 |
| 05-1-037 | 4 | 4 | 88 | 2.28 | 1.007 | 77.74 | 19.5 |
| 05-1-038 | 4 | 4 | 112 | 2.58 | 1.016 | 75.68 | 22.9 |

Table 3

| Replicates of poly(DVB) and poly(styrene-co-DVB) particles showing reproducibility for the experiments at a fixed time. | | | | | | | |
|---|---|---|---|---|---|---|---|
| Sample Id | DVB vol % | S-DVB vol% | AIBN wt% | P.Time h | $D_n$ $\mu$m | U | Surface Area $m^2$/g |
| 05-1-031 | 3 | | 2 | 52 | 1.456 | 1.008 | 73.5 |
| 05-1-033 | 3 | | 2 | 52 | 1.524 | 1.008 | 74.0 |
| 05-1-034 | 3 | 4 | 2 | 52 | 1.573 | 1.012 | 73.0 |
| 05-2-043 | | 4 | 2 | 163 | 3.739 | 1.017 | 5.49 |
| 05-2-047 | | 4 | 2 | 163 | 3.692 | 1.014 | 5.18 |
| 05-2-044 | | 2 | 2 | 163 | 2.698 | 1.015 | 5.19 |
| 05-2-048 | | 2 | 2 | 163 | 2.802 | 1.033 | 5.47 |

Table 4

| The increase in number average diameter for the particles when the monomer concentration or the time of polymerization increases. | | | | | | | |
|---|---|---|---|---|---|---|---|
| Sample Id | DVB vol % | AIBN wt% | P.Time h | $D_n$ $\mu$m | U | Surface Area $m^2$/g | Yield (%) |
| 05-1-020 | 2 | 2 | 24 | 0.393 | 1.52 | N/A | 3.4 |

(continued)

| | The increase in number average diameter for the particles when the monomer concentration or the time of polymerization increases. | | | | | | |
|---|---|---|---|---|---|---|---|
| Sample Id | DVB vol % | AIBN wt% | P.Time h | $D_n$ $\mu$m | U | Surface Area $m^2/g$ | Yield (%) |
| 05-1-022 | 2 | 2 | 64 | 1.475 | 1.016 | 148.51 | 10.1 |
| 05-1-035 | 4 | 2 | 88 | 1.719 | 1.014 | 113.32 | 15.5 |
| 05-1-036 | 4 | 2 | 112 | 2.321 | 1.008 | 77.84 | 18.9 |
| 05-1-046 | 4 | 2 | 163 | 3.066 | 1.005 | 73.74 | 26.0 |
| 05-1-045 | 6 | 2 | 163 | 3.914 | 1.002 | 45.11 | 27.6 |

Table 5

Photoinitiated co-polymerization ofDVB with different monomers

| Sample Id | DVB | Comonomer | Initiator | p. time | Dn ($\mu$m) | Surface area | Yield |
|---|---|---|---|---|---|---|---|
| 06-4-105 | 9.82 g | MAA 1.62 g | AIBN 2% w/w | 95 h | 5.5 | 182.97 | 20.4 |
| 06-3-150 | 1.85 g | VBC 2.17 g | AIBN 2% w/w | 116 h | 6.6 | | 20.1 |
| 06-5-106 | 3.82 g | GMA 4.17 g | AIBN 2% w/w | 95 h | 2.4-3.8 | 2.88 | 27.4 |
| 07-6-208 | 4.32 g | HEMA 4.32 g | AIBN 2% w/w | 46 h | ~13 | | 13.9 |

Table 6

Photoinitiated polymerizations with different THF concentrations.

| Sample Id | DVB | % THF | p. time | Dn ($\mu$m) | Surface area | Yield |
|---|---|---|---|---|---|---|
| 07-1-168 | 7.31 g | 10 | 46 h | 3.5 | 22.61 | 13.1 |
| 07-1-169 | 7.31 g | 20 | 46 h | 4.8 | | 14 |
| 07-1-170 | 7.31 g | 30 | 46 h | 4-6.5 | | 11.4 |
| 07-1-173 | 7.31 g | 40 | 46 h | 5.1 | | 13.2 |
| 07-1-174 | 7.31 g | 50 | 46 h | N/A | N/A | N/A |

Table 7

Summary of photoinitiated polymerizations made with 20 ml (10 %) of different co-solvents.

| Sample Id | DVB | Acetonitrile | Co-solvent 20 ml | Initiator | p. time | Polymer shape | Yield |
|---|---|---|---|---|---|---|---|
| 07-1-165 | 7.31 g | 180 ml | 2-methoxyethanol | AIBN 2% w/w | 46 h | coagulum | 11.9 |
| 07-1-166 | 7.31 g | 180 ml | 2-propanol | AIBN 2% w/w | 46 h | coagulum | 13.3 |
| 07-1-167 | 7.31 g | 180 ml | toluene | AIBN 2% w/w | 46 h | polydisperse particles | 13.5 |
| 07-1-168 | 7.31 g | 180 ml | tetrahydrofuran | AIBN 2% w/w | 46 h | monodisperse particles | 13.1 |

Table 8

The batches that were packed in to stainless steel columns at 60 MPa

| Sample Id | $D_n$ ($\mu$m) | $U_1$ | Surface area ($m^2$/g) |
|---|---|---|---|
| 05-1-024 | 2.30 | 1.02 | 44.9 |
| 05-1-031 | 1.46 | 1.008 | 73.5 |
| 05-1-033 | 1.52 | 1.008 | 74.0 |
| 05-1-034 | 1.57 | 1.012 | 73.0 |
| 05-1-036 | 2.31 | 1.008 | 77.8 |
| 05-1-045 | 3.91 | 1.002 | 39.8 |

Table 9

| Analyte | Retention factor, k' |
|---|---|
| toluene | 0.28 |
| Benzyl alcohol | 0.14 |
| Thymine | 0.61 |
| Cytosine | 1.07 |
| Cytidine | 1.76 |

**Claims**

1. A method for producing a polymer material consisting of cross-linked, spherical, mono-disperse particles, wherein

   a) a cross-linking monomer selected from the group of divinylbenzene (DVB); and optionally
   b) a further monomer selected from the group of styrene, methacrylic acid (MAA), glycidyl methacrylate (GMA), 2-hydroxyethyl methacrylate (HEMA), and vinyl benzyl chloride (VBC);

   are polymerized in the presence of an initiator and a solvent, **characterized in that** the polymerization is a photo-induced precipitation polymerization.

2. The method according to claim 1, **characterized in that** the photoinitiation is induced by irradiation of the polymerization medium by a light source, preferably a xenon lamp, most preferably a 150 W xenon lamp.

3. The method according to any of claims 1-2, **characterized in that** the initiator is chosen from the group of peroxides, 2,2-dimethoxy-2-phenylacetophenone, benzoin methyl ether and azo compounds such as 2,2'-azobis isobutyronitrile (AIBN).

4. The method according to any of claims 1-3, **characterized in that** the solvent is acetonitrile.

5. The method according to any of claims 1-3, **characterized in that** the initial monomer concentration is between 2 -10 %.

**Patentansprüche**

1. Verfahren zur Herstellung eines Polymermaterials, bestehend aus vernetzten, sphärischen, monodispersen Partikeln, wobei

   a) ein Vernetzungsmonomer, ausgewählt aus der Gruppe aus Divinylbenzol (DVB); und gegebenenfalls
   b) ein weiteres Monomer, ausgewählt aus der Gruppe aus Styrol, Methacrylsäure (MAA), Glycidylmethacrylat (GMA), 2-Hydroxyethylmethacrylat (HEMA) und Vinylbenzylchlorid (VBC);

   in Gegenwart eines Starters und eines Lösungsmittels polymerisiert werden, **dadurch gekennzeichnet, dass** die Polymerisation eine photoinduzierte Fällungspolymerisation ist.

2. Verfahren nach Anspruch 1, **dadurch gekennzeichnet, dass** die photochemische Initiierung durch Bestrahlung des Polymerisationsmediums durch eine Lichtquelle, vorzugsweise eine Xenonlampe, am meisten bevorzugt eine 150 W Xenonlampe induziert wird.

3. Verfahren nach einem der Ansprüche 1-2, **dadurch gekennzeichnet, dass** der Starter aus der Gruppe der Peroxide, 2,2-Dimethoxy-2-phenylacetophenon, Benzoinmethylether und Azoverbindungen wie z. B. 2,2-Azobisisobutyronitril (AIBN) ausgewählt wird.

4. Verfahren nach einem der Ansprüche 1 - 3, **dadurch gekennzeichnet, dass** das Lösungsmittel Acetonitril ist.

5. Verfahren nach einem der Ansprüche 1-3, **dadurch gekennzeichnet, dass** die anfängliche Monomerkonzentration zwischen 2 - 10 % liegt.


**Revendications**

1. Méthode de production d'un matériau polymère constitué de particules monodispersées, sphériques et réticulées, dans laquelle

   a) un monomère de réticulation choisi parmi le groupe constitué par le divinylbenzène (DVB) ; et éventuellement
   b) un autre monomère choisi parmi le groupe constitué par le styrène, l'acide méthacrylique (MAA), le méthacrylate de glycidyle (GMA), le méthacrylate de 2-hydroxyéthyle (HEMA), et le chlorure de vinyl-benzyle (VBC) ;

   sont polymérisés en présence d'un initiateur et d'un solvant, **caractérisée en ce que** la polymérisation est une polymérisation par précipitation photo-induite.

2. Méthode selon la revendication 1, **caractérisée en ce que** la photo-initiation est induite par irradiation du milieu de polymérisation par une source lumineuse, préférablement une lampe au xénon, tout préférablement une lampe au xénon de 150 W.

3. Méthode selon l'une quelconque des revendications 1-2, **caractérisée en ce que** l'initiateur est choisi parmi le groupe constitué par les peroxydes, la 2,2-diméthoxy-2-phénylacétophénone, l'éther méthylique de benzoïne et les composés azoïques tels que le 2,2'-azobis-isobutyronitrile (AIBN).

4. Méthode selon l'une quelconque des revendications 1-3, **caractérisée en ce que** le solvant est l'acétonitrile.

5. Méthode selon l'une quelconque des revendications 1-3, **caractérisée en ce que** la concentration initiale en monomère est comprise entre 2 - 10%.

150 W Focused Xenon Lamp          Tumbling Ramp with Flasks Attached

**EP 2 027 163 B1**

Permeability

N3106A2

N1-106A

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5599889 A

**Non-patent literature cited in the description**

- **Lee et al.** *J. Chromatog. A,* 1995, vol. 704, 307-314
- **Zheng et al.** *Macromolecules,* 2002, vol. 35, 6828-6834
- **Li et al.** *J. Polym.sci, Part A. Polym. Chem.,* 1993, vol. 31, 2473-2479
- **Choi et al.** *Polym. Sci. Part A: Polym. Chem.,* 2002, vol. 40 (23), 4368-4377
- **Kawaguchi et al.** *Adv. Polym. Sci.,* 2005, vol. 175, 299-328
- **Downey et al.** *Macromolecules,* 1999, vol. 32, 2838-2844
- **Downey et al.** *Macromolecules,* 2001, vol. 34, 4534-4541
- **Li et al.** *J. Polym. Sci., Part A, Polym. Chem.,* 1993, vol. 31, 3257-3263
- **Shim et al.** *J. Polym. Sci., Part A: Polym. Chem.,* 2004, vol. 42, 835-845
- **Shim et al.** *Colloid Polym. Sci.,* 2004, vol. 283, 41-48
- **Paine et al.** *Macromolecules,* 1990, vol. 23 (12), 3104-3109
- **Bai et al.** *Macromolecules,* 2004, vol. 37, 9746-9752
- **Frank et al.** *J. Polymer Sci., Part A: Polym. Chem.,* 1998, vol. 36, 2223-2227
- **Li et al.** *J. Polym. Sci., Part A: Polym. Chem.,* 1999, vol. 37, 2899-2907
- **Yang et al.** *J. Polym. Sci., Part A: Polym. Chem.,* 2005, vol. 43, 1309-1311
- **Yoshida et al.** *Radiat. Phys. Chem.,* 1987
- **Naka et al.** *J. Polym. Sci., Part A: Polym. Chem.,* 1991, vol. 29, 1197-1202
- **Xianyong Lu et al.** Polymer Bulletin. Springer Verlag, 01 February 2006, vol. 56, 171-178
- **Unsal E. et al.** Reactive & Functional Polymers. Elsevier Science Publishers BV, November 2004, vol. 61, 353-368
- **Stevens.** Polymer Chenistry, an Introduction. Oxford University Press, 1999, 172
- **Bai et al.** *Polym. Int.,* 2005, vol. 54, 168-174
- **Liu et al.** *Langmuir,* 1997, vol. 13, 4988-4994
- **Brunauer.** The Adsorption of Gases and Vapors. I. Physical Adsorption. Princeton University Press, 1945
- **Carr et al.** *Ind. Eng. Chem.,* 1951, vol. 43, 692-696